# EUROPEAN PATENT APPLICATION

(11) **EP 2 192 043 A1**
(43) Date of publication of application: **02.06.2010**
(21) Application number: 08170314.2
(22) Date of filing: 28.11.2008
(51) Int. Cl.: B65D 1/02, B29C 45/27, B29C 49/00, B29C 45/00

(54) **Induced polymer segregation for injection blow molding process**

(71) Applicant: Alliance for business solutions A4BS, 2600 Berchem (BE)
(72) Inventor: Dirck, Steven, 2801 Heffen (BE)
(74) Representative: BiiP cvba

(57) **Abstract**

The present invention is directed to a blow molded article of manufacture made from one or more polymers, **characterized in that** the article shows across its wall cross section multiple zones, each zone having a different concentration or density gradient of at least one polymer.

## Description

### FIELD OF THE INVENTION

The present invention relates in general to new developments of blow molded articles, thermoplastic preforms in particular of the type used for blow molding containers, and more particularly to preforms having zones of increased concentrations of polymer based on induced polymer segregation by shear. The present invention also relates to a method for producing said containers and, in particular, to preforms used for their production, as well as a method for producing said preform.

### BACKGROUND OF THE INVENTION

The use of plastic containers as a replacement for glass or metal containers in the packaging of beverages has become increasingly popular. The most common plastic used in making beverage containers today is polyethylene terephthalate (PET). Containers made of PET are inexpensive, transparent, lightweight, recyclable and have the ability to maintain their shape by withstanding the force exerted on the walls of the container by pressurized contents, such as carbonated beverages. PET resins are also fairly inexpensive and easy to process.

Most PET containers are made by a process which includes the blow-molding of plastic preforms which have been made by processes including injection molding. In some circumstances, it is preferred that the PET material in plastic preforms is in an amorphous or semicrystalline state because materials in this state can be readily blow-molded where fully crystalline materials generally cannot.

From the above it is made clear that it would be desirable to provide a thermoplastic preform for a container having controlled differentiated performance features across its wall thickness and a commercially acceptable method of manufacturing the same.

According to a first embodiment of the present invention, the present invention is directed to a method for making a preform and resulting blow-molded article, having across its wall section multiple zones of different concentrations of polymers having defined performance characteristics and optionally a different crystallinity gradient.

According to another embodiment , a method of making the preform and blow molded article thereof is provided wherein a thermoplastic material is introduced into a mold section to form a preform having across its wall multiple zones of different concentrations of polymers having defined performance characteristics and different crystallinity gradient.

A further embodiment of the present invention provides a method and apparatus for the cost-effective manufacture of such preforms.

In accordance of the present invention, the effect of inducing controlled local shear onto a polymer melt mix allows for the subsequent segregation of polymers from which it has now been surprisingly found that preforms and blow molded articles thereof can now be obtained with superior properties that have never been attained for by conventional methods.

By achieving said multiple zones in the body and the neck during the injection molding step, a preform and subsequent blown article such as a container or bottle is achieved which has increased functional performance characteristics at targeted locations across the perform and/or container/bottle wall thickness.

Furthermore, by the process of the present invention, the prior art step of diverse co-extrusion technologies can be reduced.

### SUMMARY OF THE INVENTION

The present invention relates in general to new developments of blow molded articles, thermoplastic preforms in particular of the type used for blow molding containers, and more particularly to preforms having zones of increased concentrations or densities of specific polymer types based on induced polymer segregation by shear. The present invention also relates to a method for producing said containers and, in particular, to preforms used for their production, as well as a method for producing said preform.

### DETAILED DESCRIPTION

The present invention is directed to a blow molded article of manufacture made from one or more polymers, **characterized in that** the article shows across its wall cross section multiple zones, each zone having a different concentration or density gradient of at least one polymer.

In a preferred embodiment, the article is made from one polymer, wherein each zone has a different density gradient of said polymer.

The present invention is further directed to a blow molding preform made from one or more polymers, **characterized in that** the preform shows across its wall cross section multiple zones, each zone having a different concentration or density gradient of at least one polymer.

In addition, the present invention is further directed to an injection blow moulding method for making a polymer based article comprising the steps of injecting molten polymer in a preform mold **characterized in that** the molten polymer is exposed to sufficient amount of shear to segregate the polymer.

In accordance of the present invention, the effect of inducing controlled local shear onto a polymer melt mix allows for the subsequent segregation of polymers from which it has now been surprisingly found that preforms and blow molded articles thereof can now be obtained with superior properties that have never been attained for by conventional methods.

By means of shear induced crystallization and optionally cooling techniques , the synergistic combination underlying the present allows to introduce multiple zones, each zone having a different concentration gradient of the polymer, over the cross wall section of the preform and the resulting blown article.

Inducing shear, for example alternating shear, onto the polymer melt allows creating phase segregation of the diverse polymers within the injection process and allows regulating the mechanisms, paths and rates of movement of the melt polymer and its additives in the polymer matrix and their final wall matrix position in the preform and final wall matrix of the blow molded article thereof.

Practically, in accordance with the method of the present invention, the shear on the polymer melt and blended additives within the polymer, if any, are regulated within the hot runner system and/or preform cavity of the injection process.

Said regulating method further includes inducing a phase separation upon utilizing a polymer combined with additives aimed at different locations within the preform and resulted blow molded article.

As stated above and in accordance of the present invention the location of the blended additives within the polymer is induced by shear such as alternating shear.

To create phase segregation of the polymer and blended additives, if any, within the polymer mix, the polymer present in the molten polymer mix is being segregated in the hot runner of the injection system and /or in the preform cavity based on the shear rate of the molten polymer. This shear can be achieved by passing the molten polymer through specifically designed internal hot runner -preform cavity geometry , if needs be, combined with high injection pressure whereby the molten polymer is subjected to repetitive compression and decompression. In contrast with hot runners for traditional injection molding techniques whereby these hot runners are typically designed to avoid friction/shear when the polymer flows through the hot runner, the present invention utilizes shear as means to introduce phase separation between the diverse polymers present in the melt mix Shear can also be induced at the entrance of the preform cavity by reducing the orifice hole inside the hot runner

The basic principle behind this feature is the fact that the flow channel, through which the selected materials will flow, is being modified from a cross-sectional point-of-view and in relation to its length. The hot runner system is geometrically constructed in a manner to force the molten polymer to segregate the polymers present into more concentrated streams of such material at targeted locations of the cross-section of the perform.

These geometrical configurations of the hot runner can work on the following principles:
i) changes in diameter of the flow channel,
ii) restrictions of the flow, followed by cylindrical part and expansion of the flow,
iii) the angle at which these restrictions or expansions are profiled,
iv) inserts at selected places of the hot runner

From an executional point of view, this can be realized by either profiling of the needle and/or the outer housing of the hot runner.
The final geometrical flow channels obtained can be very diverse in design related to the final application being explored. Such design can either be symmetrical or non-symmetrical, leading to different end results. Examples are hot runner system comprises geometrical configurations selected from one or more of concentric tubes, star wheels, or zones having diameter gradients.

When selecting different additives with a sufficiently different density, and accelerating the velocity of the melt mix through e.g. symmetrical or non-symmetrical retractive channels, upon subsequent expansion, the fraction with the highest energy build-up gained through its acceleration will tend to follow the axial direction of the melt mix longer versus fractions with less build-up energy. Hence differences in density is used as a driver for a different inertia profile, enabling to improve segregation of additives with a substantially large density difference.

Such additives could be : PA (1.2 g/cm3) - PET (1.33 g/cm3) - Fe solids (7.85 g/cm3). In this case, when subjecting the selected melt mix to the conditions described above, the Fe particles concentrate in the middle of the polymer melt stream, the PET surround the Fe particles and the PA to migrate towards the outer layers of the melt mix.

The segregation can be further facilitated through the selection of materials with a different viscosity profile, especially valid for the selected polymers which can deform.

Practically, when a polymer deformable particle (e.g. PA) with density X has been introduced in another molten polymer mix having the same or a different viscosity (e.g. PET), the increased velocity gradient present across the cross-section of melt flow, resulting from the applied shear flow (e.g. through retractive channel) will introduce a shear force on the introduced particle, leading to the deformation of the particle to a more thread-like particle.

This deformation can be facilitated by selecting the appropriate melt viscosity and/or size of the particle, as well as the amount of shear force being applied.

In the example above, the PA particle will be deformed into a more thread like particle whilst moving towards the outside of the melt mix. In case that this deformation force can sufficiently long be applied over time, the thread like particle can ultimately break-up in particles having a smaller size versus its initial size. Such smaller particles will in return drive an increased clarity of the final blow molded article.

When the externally applied shear flow is subsequent released, the smaller particles can co-agulated back together, albeit more towards the outside of the polymer melt flow. When allowing sufficient processing time for this principle to reoccur, the enriched zone of PA at the outside of the melt flow could in fact co-agulate back to one single layer, herewith having achieved the highest form of segregation possible.

Through the selection of the melt flow viscosity profile of the polymer surrounding the droplet, the co-agulation process and final amount of co-agulated particles achieved can be more controlled / steered

Another aspect of the regulating system albeit to a lesser extent includes the so-called Magnus effect which refers to a physical phenomenon whereby the rotation of particle affects its path through a fluid, in this case the polymer melt mix. The source of the rotation stems from the differential in velocity profile across the cross-section of the polymer mix.

This affects both the non-solid polymer particles which 'behave like solids' as well as solids present in the melt mix. When the differential in shear force applied to a non-solid particle has become too limited to further elongate it or when the non-solid particle is too viscous to be elongated in the melt mix, it will behave as if it were a solid.
The differential in shear force will make the particle spin, making the speed in the flow direction increase. In the direction perpendicular to the flow, the speed will reduce. This difference in local speeds creates a force being applied onto the particle, making it shift towards the inside of the melt flow. This effect will happen on both solid particles as those polymer particles which cannot further deform.

The granularity and the density of the material introduced into the melt mix will have an important impact on the Magnus effect.

The Fe introduced has a higher density and as such will be less influenced by the Magnus effect.

The application of the Magnus effect also has a link with the viscosity of the polymers introduced. The lower the viscosity, the more deformable the polymer particle, even at lower differential speed at top/bottom, therefore no spinning and movement towards the outside. The higher the viscosity, the less deformable, the more the polymer particle will behave as a solid, therefore spinning and movement towards the inside based on the Magnus effect.

Equally important in understanding the mechanisme underlying the present invention is that each polymer has a specific spatial orientation of its composing atoms, which needs to assure that the total energy present in the molecular chain is well balanced. Higher molecular weight polymers will take a different spatial atom configuration versus lower molecular weight polymers.

When a mixture of a high and low molecular weight polymer is molten and subsequently pushed through a shear flow area (e.g. : a retractive section), the external forces applied will force both the high and low molecular weight polymers to adapt their spatial orientation such as to reach a new equilibrium. With polymers, the applied external force will result into a 'counter-force' which will be perpendicular to the flow path. Within certain boundary conditions, an increased applied external force will result in an increased normal force perpendicular to the flow path. This will be especially valid for linear polymers from the same chemical family, although a similar, but likely less efficient, effect could be expected when utilizing branched polymers.

When this combination of low and high molecular weight polymers is released from the externally applied shear force (e.g.: an expansion section), a different behaviour of both low and high molecular weight fractions will be observed:
- the low molecular weight fraction will more rapidly release a lower perpendicular force;
- the high molecular weight fraction will more slowly release a higher perpendicular force;

As a result, a different subsequent flow pattern between the low and high molecular weight fraction is expected:
- the low molecular weight fraction can move quicker to the outside of the stream, hence tends to move outwards from the polymer melt;
- the high molecular weight fraction will more slowly show an even more outspoken effect of outwards movement

The low molecular weight fraction will furthermore more rapidly show alignment versus the higher molecular fraction which will need more time to reach alignment of the macromolecules.

In accordance with the present invention the above principle allows to induce a different flow pattern between selected lower and higher molecular weight polymers. Hence, when carefully choosing the type and associated physical characteristics, a structure with a segmented performance characteristics. This could include, amongst others, the selection of a higher barrier resin (such as PA, EVOH, PLA, PGA ) as the LMW fraction of the melt mix.

In line with the process of the present invention, across the geometrical configuration of the hot runner, the so-called Bernoulli Effect will come into place and create a difference in static pressure in-between the top and the bottom of a particle which is present in the melt mix, driven by the velocity gradient across the section.
In particular, on non-deformable particles, this will lead to the Magnus effect, described above; wheras on deformable particles, depending on the particle size, the difference in static pressure will be higher (big particles) or lower (small particles), leading to more or less elongation of the particle into a more thread like configuration, which will start to move to the outside sections

In most general terms, the polymers which could be utilized in the current invention would include, without being limitative :
- polymers including copolymers, homopolymers, lineair, branched, high MW, low MW, liquid crystal polymers
- thermoplastic materials
- solid materials

The main selection criteria and hence also limitation to material applications is the fact that the selected materials need to be separable. This could be realized by selected materials to be sufficiently different on selected rheological characteristics.

Preferred examples of polymers include PET, PEN, PTT, PTN; polyamides Ike PA6, PA66, PA11, PA12; polyolefins like PE, PP; EVOH; biodegradable polymers like polyglycol acetate (PGAc), Polylactic acid (PLA); and copolymers and blends thereof.

In the present invention, various additives such as Ag, an oxidation inhibitor, an ultraviolet absorber, a colorant, a nucleating agent , a filler, a blend resin, and mixtures thereof may be added to the polymer utilized.

The preforms are preferably monolayer; that is, comprised of a single layer of a base material, or they may be multilayer, including, but not limited to, those which comprise a combination of a base material and materials with specific functional performance characteristics.

The material in such layers may be a single material or it may be a blend of one or more materials so as to include blends of materials with specific performance characteristics

By use of wide angle x-ray diffraction method, orientations of crystallographic axis or planes can be determined stereoscopically and quantitatively. Wide angle x-ray diffraction is widely used in the field of material science, and one of the popular experimental techniques. These are described, for example, in Japanese Patent Provisional Publication Nos. 53-129116, 62-240714, 2-86650, and Japanese Patent Publication No.57-9418.

The above advantages make the articles of the present invention very suitable for high speciality applications including diverse carbonated and/or non- carbonated beverage applications.

### EXAMPLES

1. Injection System (Figure 1)
a. A commercially available grade of a polymer, being PET, is taken within a classical IV range of 0.78 - 0.82, like reference M&G Cobiter 80.
b. The polymer referenced under 1a. is converted on a classical injection machine, like type Huskey, operated at typical machine settings :

| | | |
|---|---|---|
| ○ | Extruder Barrel | 270 - 290°C |
| ○ | Nozzle | 270 - 290°C |
| ○ | Manifold | 275 - 295 °C |
| ○ | Gates | 280 - 300°C |
| ○ | Mold Cooling Water | 10 - 15 °C |
| ○ | Cycle Time | 10 - 60 seconds |

c. Position 1b is repeated with a commercially available grade of a polymer, being PET, with an increased IV range of 0.82 - 0.86, like reference M&G Cleartuf Max. (with and without Ag additive)
d. Position 1b is repeated with a commercially available grade of a crystallizable co-polymer, being PET based, within a classical IV range of 0.78 - 0.82, like reference M&G Cleartuf 8006.
2. Hot runner system
a. Positions 1a through 1d are executed with normal classical hot runner configuration for injected preform production.
b. Positions 1a through 1d are repeated with the incorporation of specific hot runner modifications as referenced under figures 2 through 9.
3. Injection Preform
a. Positions described under 1 and 2 are executed with the use of an industry available preform suitable for an injection stretch blow molded bottle of a selected volume size.
b. Position 3a is repeated but with the use of an industry available preform suitable for an injection stretch blow molded bottle, the preform having a reduced axial stretch ratio for the selected volume size.
c. Position 3a is repeated with adapted preform mold temperatures in-between 8 and 60°C for either neck and/or body area.
d. Position 3b is repeated with adapted preform mold temperatures in-between 8 and 60°C for either neck and/or body area.
4. Preform Reheating process
a. The preforms obtained from positions 3a through 3d are reheated on an conventional blow molding machine, like Sidel, operated under preform reheat temperature range of 90 to 95 °C.
b. The performs obtained from positions 3a through 3d are reheated on an conventional blow molding machine, like Sidel, operated under preform reheat temperature range of 100 to 110 °C.
c. The performs obtained from positions 3a through 3d are reheated on an conventional blow molding machine, like Sidel, operated under preform reheat temperature range of 120 to 130 °C.
5. Blow molding process
a. The performs obtained from positions 4a through 4c are blown in a conventional blow mold suitable for an injection stretch blow molded bottle of the selected size operated at mold temperature of 23 °C.
b. The performs obtained from positions 4a through 4c are blown in a conventional blow mold suitable for an injection stretch blow molded bottle of the selected size operated at mold temperature of 80 °C.
c. The performs obtained from positions 4a through 4c are blown in a conventional heat set blow mold suitable for an injection stretch blow molded bottle of the selected size operated at mold temperature of 160 °C.

The above example demonstrates the benefits as set out in the description with respect to end functional properties for diverse carbonated and/or non-carbonated beverage applications.

In the specification and the figures only typical embodiments have been disclosed. Specific terms have been used in a generic and descriptive sense and done not for the purpose of limitation. As apparent to those skilled in the art, it should be understood that this invention is not to be unduly limited to the illustrative example as set out hereinabove.

## Claims

1. A blow molded article of manufacture made from one or more polymers, **characterized in that** the article shows across its wall cross section multiple zones, each zone having a different concentration or density gradient of at least one polymer.

2. An article according to claim 1, made from one polymer, wherein each zone has a different density gradient of said polymer.

3. An article according to claim 1, wherein the polymer is standard PET, HMW PET or modified PET or mixtures thereof.

4. An article according to claim 1- 3, further comprising additives and/or copolymers suitable for modifying the physical characteristics of the article, such as but not limited to polyamide, PGA, PEN, or mixtures thereof.

5. A blow molding preform made from one or more polymers, **characterized in that** the preform shows across its wall cross section multiple zones, each zone having a different concentration or density gradient of at least one polymer.

6. A injection blow moulding method for making a polymer based article comprising the steps of injecting molten polymer in a preform mold **characterized in that** the molten polymer is exposed to sufficient amount of shear to segregate the polymer.

7. A injection blow moulding method according to claim 6 for making a polymer based article comprising the steps of injecting molten polymer in a preform mold via a hot runner system.

8. A method according to claim 6 to 7, wherein the hot runner system is geometrically constructed in a manner to force the molten polymer to segregate.

9. A method according to claim 8, wherein the hot runner system comprises geometrical configurations selected from one or more of concentric tubes, star wheels, or zones having diameter gradients.

10. A method according to claim 6 to 9, wherein the preform shows across its wall cross section multiple zones, each zone having a different concentration gradient of polymer and optionally different crystallinity gradient.

11. A method according to claim 6 to 10, wherein the polymer is standard PET, HMW PET or modified PET.

12. A method according to claim 6 to 11, further comprising the step of providing copolymers suitable for modifying the preform's physical characteristics, such as, but not limited to polyamide, PGA, PEN, or mixtures thereof.

13. A method according to claim 6 to 12, further comprising the step of providing additives suitable for modifying the preform's physical characteristics, such as, but not limited to Ag.

14. A method according to claim 6 to 13 whereby the segregation is induced by alternate shear.

15. Use of an article according to claims 1-4 to for carbonated and/or non-carbonated beverage application
